# EUROPEAN PATENT SPECIFICATION

(11) **EP 3 907 852 B1**
(45) Date of publication and mention of the grant of the patent: **02.07.2025**
(21) Application number: 20173097.5
(22) Date of filing: 06.05.2020
(51) Int. Cl.: H02J 9/06

(54) **AN EMERGENCY DRIVER FOR SUPPLYING EMERGENCY LIGHTING MEANS**
NOTFALLTREIBER ZUR VERSORGUNG VON NOTBELEUCHTUNGSMITTELN
PILOTE D'URGENCE POUR FOURNIR DES MOYENS D'ÉCLAIRAGE D'URGENCE

(43) Date of publication of application: 10.11.2021
(73) Proprietor: Tridonic GmbH & Co. KG, 6851 Dornbirn (AT)
(72) Inventor: Santiago, Alekssander, 6850 Dornbirn (AT); de Menezes, Cristiano, 6850 Dornbirn (AT)
(74) Representative: Rupp, Christian

(56) References cited:
- WO-A1-2018/037044
- GB-A- 2 563 680
- US-A1- 2015 008 844
- US-A1- 2020 083 741

## Description

### TECHNICAL FIELD OF THE INVENTION

The invention relates to an emergency driver for supplying emergency lighting means. The invention further relates to a method for supplying emergency lighting means.

### BACKGROUND OF THE INVENTION

Emergency lighting systems typically are designed to operate, upon mains failure, emergency lighting means off a central or decentral battery. Self-contained and centralized systems both usually rely on a single source for emergency operation. However, once the single source of energy for emergency operation is depleted, the emergency operation is ended as there is no alternative source available. There is no opportunity to extend emergency duration. Moreover, the lamp or emergency lighting means does not support alternative sources during emergency operation.

Document US 2015/0008844 A1 discloses a lighting power supply system including a mains input converter operable to provide power, a controller operable to control at least one element of the lighting system, a controller bus and a controller interface operable to provide control signals from the bus to the lighting system. An auxiliary converter powers the lighting system from the bus and it may allow the controller to continue to be powered when the mains input is absent and an emergency battery is depleted.

Thus, it is an objective to provide an improved emergency driver for supplying emergency lighting means.

### SUMMARY OF THE INVENTION

The object of the present invention is achieved by the solution provided in the enclosed independent claims. Advantageous implementations of the present invention are further defined in the dependent claims.

According to a first aspect of the invention, an emergency driver for supplying emergency lighting means is provided.

The emergency driver is configured to be powered, during operation of the emergency lighting means, selectively from: a local battery associated to the emergency driver or a DC network supplying DC power to DC terminals of the driver, wherein the emergency driver comprises a first circuitry configured to charge the local battery with DC power supplied to the DC terminals, and a second circuitry having the function to drive the emergency lighting means from the local battery and the function to drive the DC power supplied to the DC terminals. This has the advantage to smoothly transfer the lamp or emergency lighting means supply from its local battery to the DC network. In an embodiment, the emergency driver is furthermore configured to supply power from the local battery to the DC terminals in order to supply the DC bus.

In an embodiment, the emergency driver comprises a MOSFET bridge rectifier.

According to the invention the emergency driver comprises two controlled switches, wherein the switches are configured to connect or disconnect the driver from the DC network.

If the switches are turned on, then the local battery is charged and the emergency lighting means is supplied by the DC network.

In an embodiment, if the switches are turned off, then the local battery is configured to supply the emergency lighting means.

In an embodiment, the emergency lighting means comprises a LED module.

In an embodiment, the emergency driver further comprises a bidirectional DC-DC converter, wherein the DC-DC converter is configured to interface the local battery with the DC terminals.

In an embodiment, the DC-DC converter is a bidirectional switched isolated converter, such as e.g. flyback converter.

In an embodiment, the emergency driver comprises a further DC-DC converter, wherein the further DC-Dc converter is configured to drive the lighting means.

In an embodiment, the further DC-DC converter is a buck-boost converter.

In an embodiment, the emergency driver further comprises communication capabilities configured to demand power assistance from the DC network.

According to a second aspect, the invention relates to a method for supplying emergency lighting means, comprising: charging a local battery with DC power supplied to DC terminals, and driving the emergency lighting means from the local battery or the DC power supplied to the DC terminals.

### BRIEF DESCRIPTION OF THE DRAWINGS

The invention will be explained in the followings together with the figures.
- Fig. 1: shows an embodiment of an emergency driver for supplying emergency lighting means;
- Fig. 2: shows a further embodiment of an emergency driver for supplying emergency lighting means;
- Fig. 3: shows a further embodiment of an emergency driver for supplying emergency lighting means; and
- Fig. 4: shows an embodiment of a method for supplying emergency lighting means.

### DETAILED DESCRIPTION OF THE PREFERRED EMBODIMENTS

Aspects of the present invention are described herein in the context of an emergency driver for supplying emergency lighting means.

The present invention is described more fully hereinafter with reference to the accompanying drawings, in which various aspects of the present invention are shown. This invention however may be embodied in many different forms and should not be construed as limited to the various aspects of the present invention presented through this disclosure. Rather, these aspects are provided so that this disclosure will be thorough and complete, and will fully convey the scope of the present invention to those skilled in the art. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

Various aspects of an emergency driver for supplying emergency lighting means will be presented.

The term "LED luminaire" shall mean a luminaire with a light source comprising one or more LEDs. LEDs are well-known in the art, and therefore, will only briefly be discussed to provide a complete description of the invention.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices. Reference will now be made in detail to implementations of the exemplary aspects as illustrated in the accompanying drawings. The same references signs will be used throughout the drawings and the following detailed descriptions to refer to the same or like parts.

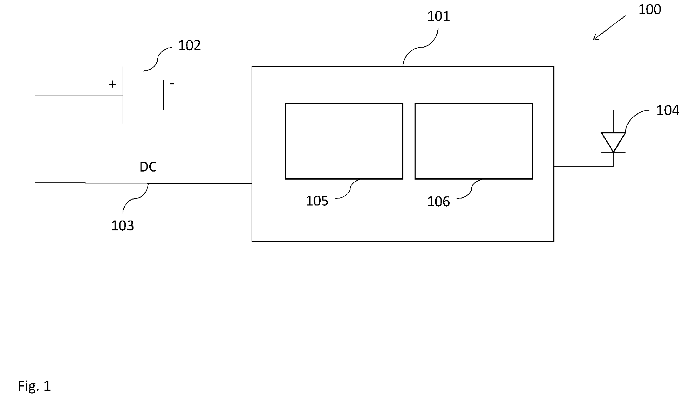

Now referring to Fig. 1, an embodiment of a system 100 comprising an emergency driver 101 for supplying emergency lighting means 104 is shown.

The emergency driver 101 is configured to be powered, during operation of the emergency lighting means 104, selectively from:
- a local battery 102 associated to the emergency driver 101; or
- a DC network 103 supplying DC power to DC terminals of the driver 101.

Moreover, the emergency driver 101 comprises:
- a first circuitry 105 configured to charge the local battery 102 with DC power supplied to the DC terminals; and
- a second circuitry 106 configured to drive the emergency lighting means 104 from the local battery 102 or the DC power supplied to the DC terminals.

According to an embodiment, the emergency driver 101 is arranged such that during ongoing emergency operation (operation of the preferably LED based emergency lighting modules 104) a smooth transition from the local battery 102 to the DC network 103 supply is achieved, especially when the local battery status reaches a predefined minimal voltage level of the local battery 102 and the emergency lighting means 104 are then driven off the central battery.

The emergency driver 101 can then demand, via a communication to a central bus manager, to have power assistance from the DC bus.

Therefore, the emergency driver 101 has the capability to be powered (during operation of the emergency lighting means 104) from its associated local battery 102 but also from the DC network 103. Optionally, it can further have communication capabilities to demand the power assistance from the DC network 103.

As the battery 102 starts to run flat, the battery output voltage shall be raised until it matches the network voltage. The lamp or emergency lighting module or load 104 shall follow this increase in its input voltage. This implies that the load should have the ability to work with a variety of inputs voltages, including the maximum network voltage.

Once, both the battery output and load are adjusted, the connection shall be established to the network. The load is then supplied by the network, while the network also gets energy from the battery 102. As the battery voltage drops close to low voltage battery cut off, LVBCO, the discharge current reduces in steps as the new battery current increases in steps.

This provides the advantage of transferring the lamp supply smoothly and to continue the emergency operation. Therefore, there is a smooth load transfer of the load from a self-contained battery 102 to the DC network system.

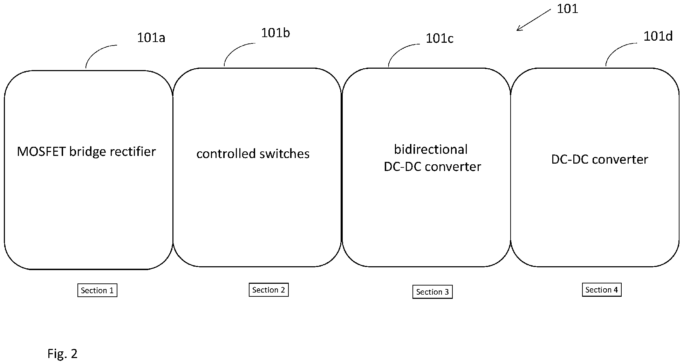

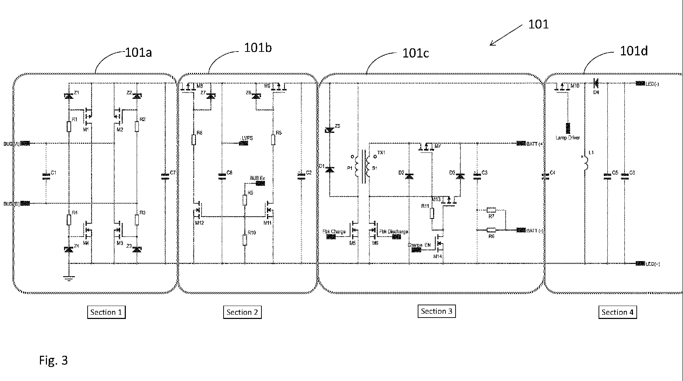

Fig. 2 and 3 show a further embodiment of an emergency driver 101 for supplying emergency lighting means 104.

In semi-centralized emergency systems, SCEMS, a DC voltage can be maintained in maintained mode and in emergency mode. This voltage can be used to charge the batteries and supply the maintained loads. In emergency mode, this voltage can be used as primary source for loads with no local battery and loads with local batteries, but those same batteries may not meet the duration requirements.

In emergency mode, the DC Bus voltage is maintained by a group of batteries, from the bus manager (a device responsible to secure the maintained mode voltage and manage all the loads and sources connected to the DC Network) or from devices with self-contained batteries, capable of sharing the battery energy.

Self-contained devices will be supplied first by the local battery, before switching to the DC bus.

In figure 2, a concept of a self-contained emergency driver comprising a local battery supply with remote supply capability is presented.

The driver is separated into four sections, as schematically shown in Figs. 2 and 3:
- section 1: a MOSFET bridge rectifier 101a guarantees low loss bidirectional flow of energy. This ensures that the driver 101 can be supplied by an external source and can also provide energy to other drivers/load connected to the DC bus;
- section 2: two controlled switches 101b connect and disconnect the driver 101 from the DC network 103. This means that the LED driver 101 can operate at a different voltage than the DC network 103, for example while in emergency mode. It can also operate directly from the battery voltage. These switches can be configured to be on in maintained mode, allowing the batteries to be charged and the LED driver 101 to be supplied by the DC network 103. In emergency mode, they can be configured to be turned off, if the local battery 102 is capable of supplying the LED driver 101. If not, the switches can be configured to be turned on and the LED driver 101 can be supplied by the DC network 103. This provides the advantage that several switches are used to isolate the different levels of voltages necessary to secure a smooth transition;

- section 3: a bidirectional DC-DC converter 101c, in the embodiment shown in Fig. 3 a bidirectional flyback, is used to interface the battery 102 with the mains rail of the driver 101. This can be used to charge and discharge the battery 102 with specific currents. The battery voltage can be used to increase to match the rail voltage if necessary.
- section 4: a DC-DC converter 101d is used to drive the LEDs 104. In the embodiment in Fig. 3, a buck-boost converter is shown. The input of the converter 101d can be connected to the main rail of the driver 101. In maintained mode, if the LEDs are on, the driver 101 can be supplied by the DC network 103 by turning on the switches in section 2, 101b. In emergency mode, the switches, 101b, in section 2 can be turned off if the local battery 102 is to be used. The circuit of the charger, section 3, can be by-passed by an additional circuit to improve the emergency mode efficiency.

Therefore, advantageously, a secure smooth transition from local battery supply 102 to DC network supply, while in emergency mode, is achieved. If this transition is not smoothly secured, light flicker will be visible.

As the local battery 102 of the driver 101 depletes, the supply of the LED driver 101 shall be transferred from the battery 101 to the DC network 103. This transfer can be preceded by a communication signal sent by the driver 101 to the bus manager informing about the additional load that is about to be transferred to the DC bus. The switches of section 2 should be off while the lamp driver 101d is being fully supplied by the local battery 102. The lamp supply can be connected to the main rail of the driver 101. This means that, if an additional switch is used to connect the battery directly to the LED driver 101 input to improve efficiency, it should be turned off before the transition to the DC network. Previous to that, the battery DC-DC converter should start discharging the battery, if it was not already guaranteeing supply to the main rail.

The battery DC-DC converter can increase the main railvoltage slow and gradually until it matches the instantaneous DC network voltage. The switches of section 2 are then turned on.

In this configuration, the local battery 102 of the driver 101 is providing energy to the DC network. The local battery 102 shall start reducing slow and gradually its discharge current until the battery 102 is completely depleted or reaches a pre-defined cut-off level. A synchronization signal might be used to synchronise the reduction of the discharge current with the emergency sources connected to the DC network 103, to ensure the DC network maintains balanced.

Once the local battery 102 is completely depleted or reaches a pre-defined cut-off level, it shall stop discharging. The LED driver 101 can continue its operation being supplied from the DC network 103.

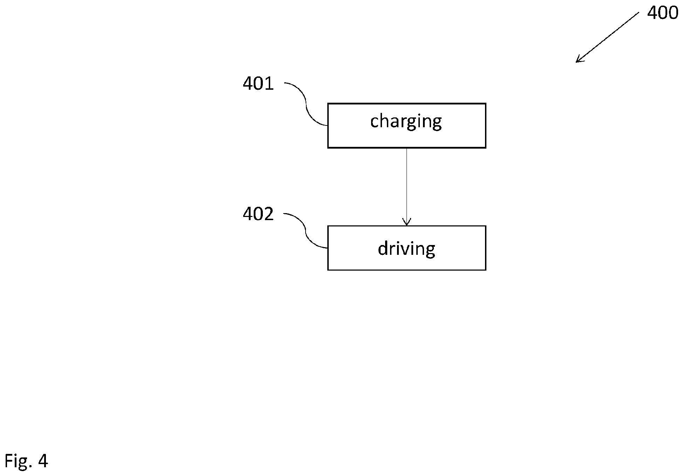

Fig. 4 shows an embodiment of a method 400 for supplying emergency lighting means 104.

The method 400 for supplying emergency lighting means, comprises the steps of:
charging 401 a local battery 102 with DC power supplied to DC terminals; and
driving 402 the emergency lighting means 104 from the local battery 102 or the DC power supplied to the DC terminals.

This method has the advantage that a secure smooth transition from local battery 102 supply to DC network supply, while in emergency, is provided.

All features of all embodiments described, shown and/or claimed herein can be combined with each other.

While various embodiments of the present invention have been described above, it should be understood that they have been presented by way of example only and not limitation.

All features of all embodiments described, shown and/or claimed herein can be combined with each other.

The scope of the invention should be defined in accordance with the following claims.

## Claims

1. An emergency driver (101) for supplying emergency lighting means (104), wherein the emergency driver (101) is configured to be powered, during operation of the emergency lighting means (104), selectively from:
- a local battery (102) associated to the emergency driver (101); or
- a DC network (103) supplying DC power to DC terminals of the driver (104);
wherein the emergency driver (101) comprises:
- a first circuitry (105) configured to charge the local battery (102) with DC power supplied to the DC terminals; and
- a second circuitry (106) configured to have the capability to drive the emergency lighting means (104) from the local battery (102) and to have the capability to drive the emergency lighting means (104) from the DC power supplied to the DC terminals, **characterized by**
- two controlled switches (101b), wherein the switches (101b) are configured to connect or disconnect the driver from the DC network (103), wherein, if the switches (101b) are turned on, then the local battery (102) is charged and the emergency lighting means (104) is supplied by the DC network (103).

2. The emergency driver (101) of claim 1, wherein the emergency driver (104) is furthermore configured to supply power from said local battery (102) to the DC terminals in order to supply a DC bus.

3. The emergency driver (101) of claim 1 or 2, wherein the emergency driver (101) comprises a MOSFET bridge rectifier (101a).

4. The emergency driver (101) of any one of the preceding claims, wherein the emergency lighting means (104) comprises a LED module.

5. The emergency driver (101) of any one of the preceding claims, wherein the emergency driver (101) further comprises a bidirectional DC-DC converter (101c), wherein the DC-DC converter (101c) is configured to interface the local battery (102) with the DC terminals.

6. The emergency driver (101) of claim 5, wherein the DC-DC converter (101c) is a bidirectional switched isolated converter, such as e.g. a bidirectional flyback converter.

7. The emergency driver (101) of any one of the preceding claims, wherein the emergency driver (101) comprises a further DC-DC converter (101d), wherein the further DC-Dc converter (101d) is configured to drive the lighting means (104).

8. The emergency driver (101) of claim 6 or 7, wherein the further DC-DC converter (101d) is a buck-boost converter.

9. The emergency driver (101) of any one of the preceding claims, wherein the emergency driver (101) further comprises communication capabilities configured to demand power assistance from the DC network (103).

10. A method (400) for supplying emergency lighting means (104), comprising:
- charging (401) a local battery (102) with DC power supplied to DC terminals; and
- driving (402) the emergency lighting means (104) from the local battery (102) or the DC power supplied to the DC terminals;
- connecting or disconnecting a driver from a DC network (103) via two controlled switches (101b); and
- charging the local battery (102) and suppling the emergency lighting means (104) by the DC network (103) if the switches (101b) are turned on.

## Patentansprüche

1. Notfalltreiber (101) zum Versorgen von Notbeleuchtungsmitteln (104), wobei der Notfalltreiber (101) konfiguriert ist, um während des Betriebs der Notbeleuchtungsmittel (104) wahlweise mit Strom versorgt zu werden von:
- einer dem Notfalltreiber (101) zugeordneten lokalen Batterie (102); oder
- einem Gleichstromnetz (103), das Gleichstrom an die Gleichstromanschlüsse des Treibers (104) liefert;
wobei der Notfalltreiber (101) umfasst:
- eine erste Schaltlogik (105), die konfiguriert ist, um die lokale Batterie (102) mit Gleichstrom aufzuladen, der an die Gleichstromanschlüsse geliefert wird; und
- eine zweite Schaltlogik (106), die konfiguriert ist, um die Fähigkeit aufzuweisen, das Notbeleuchtungsmittel (104) über die lokale Batterie (102) anzusteuern und die Fähigkeit aufzuweisen, das Notbeleuchtungsmittel (104) über den an die Gleichstromanschlüsse gelieferten Gleichstrom anzusteuern, **gekennzeichnet durch**
- zwei gesteuerte Schalter (101b), wobei die Schalter (101b) konfiguriert sind, um den Treiber mit dem Gleichstromnetz (103) zu verbinden oder davon zu trennen, wobei, wenn die Schalter (101b) eingeschaltet sind, die lokale Batterie (102) geladen wird und das Notbeleuchtungsmittel (104) von dem Gleichstromnetz (103) versorgt wird.

2. Notfalltreiber (101) nach Anspruch 1, wobei der Notfalltreiber (104) des Weiteren konfiguriert ist, um Strom von der lokalen Batterie (102) an die Gleichstromanschlüsse zu liefern, um einen Gleichstrombus zu versorgen.

3. Notfalltreiber (101) nach Anspruch 1 oder 2, wobei der Notfalltreiber (101) einen MOSFET-Brückengleichrichter (101a) umfasst.

4. Notfalltreiber (101) nach einem der vorstehenden Ansprüche, wobei das Notbeleuchtungsmittel (104) ein LED-Modul umfasst.

5. Notfalltreiber (101) nach einem der vorstehenden Ansprüche, wobei der Notfalltreiber (101) ferner einen bidirektionalen DC-DC-Wandler (101c) umfasst, wobei der DC-DC-Wandler (101c) konfiguriert ist, um die lokale Batterie (102) mit den Gleichstromanschlüssen zu verbinden.

6. Notfalltreiber (101) nach Anspruch 5, wobei der DC-DC-Wandler (101c) ein bidirektionaler geschalteter isolierter Wandler ist, wie beispielsweise ein bidirektionaler Sperrwandler.

7. Notfalltreiber (101) nach einem der vorstehenden Ansprüche, wobei der Notfalltreiber (101) einen weiteren DC-DC-Wandler (101d) umfasst, wobei der weitere DC-DC-Wandler (101d) konfiguriert ist, um das Leuchtmittel (104) anzusteuern.

8. Notfalltreiber (101) nach Anspruch 6 oder 7, wobei der weitere DC-DC-Wandler (101d) ein Buck-Boost-Wandler ist.

9. Notfalltreiber (101) nach einem der vorstehenden Ansprüche, wobei der Notfalltreiber (101) ferner Kommunikationsfähigkeiten umfasst, die konfiguriert sind, um Energieunterstützung vom Gleichstromnetz (103) anzufordern.

10. Verfahren (400) zum Versorgen von Notbeleuchtungsmitteln (104), umfassend:
- Laden (401) einer lokalen Batterie (102) mit Gleichstrom, der an Gleichstromanschlüsse geliefert wird; und
- Ansteuern (402) der Notbeleuchtungsmittel (104) über die lokale Batterie (102) oder den an die Gleichstromanschlüsse gelieferten Gleichstrom;
- Verbinden oder Trennen eines Treibers mit bzw. von einem Gleichstromnetz (103) über zwei gesteuerte Schalter (101b); und
- Laden der lokalen Batterie (102) und Versorgen der Notbeleuchtungsmittel (104) durch das Gleichstromnetz (103), wenn die Schalter (101b) eingeschaltet sind.

## Revendications

1. Circuit de pilotage d'urgence (101) permettant d'alimenter un moyen d'éclairage de secours (104), dans lequel le circuit de pilotage d'urgence (101) est configuré pour être alimenté en puissance, pendant le fonctionnement du moyen d'éclairage de secours (104), sélectivement à partir de :
- une batterie locale (102) associée au circuit de pilotage d'urgence (101) ; ou
- un réseau CC (103) alimentant de la puissance CC à des bornes CC du circuit de pilotage (104) ;
dans lequel le circuit de pilotage d'urgence (101) comprend :
- un premier système de circuits (105) configuré pour charger la batterie locale (102) avec de la puissance CC alimentée aux bornes CC ; et
- un second système de circuits (106) configuré pour avoir la capacité de piloter le moyen d'éclairage de secours (104) à partir de la batterie locale (102) et pour avoir la capacité de piloter le moyen d'éclairage de secours (104) à partir de la puissance CC alimentée aux bornes CC, **caractérisé par**
- deux commutateurs (101b) commandés, dans lequel les commutateurs (101b) sont configurés pour connecter ou déconnecter le circuit de pilotage par rapport au réseau CC (103), dans lequel, si les commutateurs (101b) sont mis sous tension, alors la batterie locale (102) est chargée et le moyen d'éclairage de secours (104) est alimenté par le réseau CC (103).

2. Circuit de pilotage d'urgence (101) selon la revendication 1, dans lequel le circuit de pilotage d'urgence (104) est configuré en outre pour alimenter en puissance à partir de ladite batterie locale (102) les bornes CC afin d'alimenter un bus CC.

3. Circuit de pilotage d'urgence (101) selon la revendication 1 ou 2, dans lequel le circuit de pilotage d'urgence (101) comprend un redresseur en pont MOSFET (101a).

4. Circuit de pilotage d'urgence (101) selon l'une quelconque des revendications précédentes, dans lequel le moyen d'éclairage de secours (104) comprend un module de DEL.

5. Circuit de pilotage d'urgence (101) selon l'une quelconque des revendications précédentes, dans lequel le circuit de pilotage d'urgence (101) comprend en outre un convertisseur CC-CC (101c) bidirectionnel, dans lequel le convertisseur CC-CC (101c) est configuré pour assurer l'interface de la batterie locale (102) avec les bornes CC.

6. Circuit de pilotage d'urgence (101) selon la revendication 5, dans lequel le convertisseur CC-CC (101c) est un convertisseur isolé commuté bidirectionnel, tel que par exemple un convertisseur à transfert indirect bidirectionnel.

7. Circuit de pilotage d'urgence (101) selon l'une quelconque des revendications précédentes, dans lequel le circuit de pilotage d'urgence (101) comprend un convertisseur CC-CC supplémentaire (101d), dans lequel le convertisseur CC-CC supplémentaire (101d) est configuré pour piloter le moyen d'éclairage (104).

8. Circuit de pilotage d'urgence (101) selon la revendication 6 ou 7, dans lequel le convertisseur CC-CC supplémentaire (101d) est un convertisseur abaisseur-élévateur.

9. Circuit de pilotage d'urgence (101) selon l'une quelconque des revendications précédentes, dans lequel le circuit de pilotage d'urgence (101) comprend en outre des capacités de communication configurées pour demander une assistance de puissance auprès du réseau CC (103).

10. Procédé (400) permettant d'alimenter un moyen d'éclairage de secours (104), comprenant :
- le fait de charger (401) une batterie locale (102) avec de la puissance CC alimentée à des bornes CC ; et
- le pilotage (402) du moyen d'éclairage de secours (104) à partir de la batterie locale (102) ou de la puissance CC alimentée aux bornes CC ;
- la connexion ou déconnexion d'un circuit de pilotage par rapport à un réseau CC (103) par l'intermédiaire de deux commutateurs commandés (101b) ; et
- le fait de charger la batterie locale (102) et d'alimenter le moyen d'éclairage de secours (104) par le réseau CC (103) si les commutateurs (101b) sont mis sous tension.
